# EUROPÄISCHE PATENTANMELDUNG

(11) **EP 1 619 020 A1**
(43) Veröffentlichungstag der Anmeldung: **25.01.2006**
(21) Anmeldenummer: 04405470.8
(22) Anmeldetag: 22.07.2004
(51) Int. Cl.: B32B 27/06, E04B 1/90

(54) **Versteifungskörper**

(71) Anmelder: Alcan Technology & Management Ltd., 8212 Neuhausen am Rheinfall (CH)
(72) Erfinder: Walsch, Thomas, 49525 Lengerich i.W. (DE); Seidel, Siegfried, 49205 Hasbergen (DE)

(57) **Zusammenfassung**

Ein Versteifungskörper (10) weist eine biegsame Leichtstoffplatte (12) mit wenigstens einer mit einer Oberfläche der Platte (12) verbundenen Deckschicht (14, 16) auf. Die Deckschichten (14, 16) umfassen wenigstens eine Materialschicht mit einer Vielzahl von durch die Materialschicht gebildeten und von der Plattenoberfläche aufragenden Versteifungselementen (15), insbesondere eine aus der Materialschicht durch Prägen, Drücken, Tiefen und dergleichen Verformungsschritte herausgeformte Materialschicht. Die infolge der rechtwinklig zur unverformten Materialschichtebene auftretenden Zunahme der Dicke des verformten Werkstoffes führt zu einer erhöhten Quersteifigkeit des verformten Grundmaterials und damit zu einer besseren Biegefestigkeit des Versteifungskörpers.

## Beschreibung

Die Erfindung betrifft einen Versteifungskörper mit einer biegsamen Leichtstoffplatte mit wenigstens einer mit einer Oberfläche der Platte verbundenen Deckschicht.

Zur Erhöhung der Belastbarkeit der Dachfläche eines Fahrzeugs wird die Dachaussenhaut vom Fahrzeuginnern her versteift. Mit der über Klebstoffraupen oder einen vollflächig aufgetragenen Klebstoff mit der Dachhaut verklebten Dachversteifung wird gleichzeitig eine Schalldämmung und Wärmeisolierung erreicht.

Eine aus der EP-B-0 825 066 bekannte Dachversteifung für Fahrzeuge besteht aus einer einseitig mit einer Deckschicht verbundenen Platte aus geschäumtem Kunststoff. Zur Herstellung dieser Dachversteifung wird zunächst eine beidseitig mit einer Deckschicht verbundene Platte aus geschäumtem Kunststoff hergestellt. Anschliessend wird die geschäumte Platte mittig in zwei einseitig mit einer Deckschicht versehene Platten gespalten und mit Übermass auf die Abmessungen der Dachhaut zugeschnitten. Eine einzelne Deckschicht wird ebenfalls mit Übermass auf die Abmessung der Dachhaut zugeschnitten und zusammen mit einer Klebstoffschicht zwischen der Schaumplatte und der einzelnen Deckschicht in einem der Wölbung und Kontur der Dachhaut entsprechenden Formwerkzeug auf die endgültige Form umgeformt und verklebt. Kurz vor Öffnung des Formwerkzeugs wird das Formteil zur passenden Dachversteifung ausgestanzt. Der geschäumte Kunststoff ist ein Polyurethanschaum, die Deckschichten bestehen aus Kraftlinern. Die zur Fertigung der Dachversteifung erforderlichen teuren Formwerkzeuge führen zu entsprechend hohen Endkosten.

Auch bei dem aus der WO-A-01/26 878 bekannten Verfahren zur Herstellung einer Dachversteifung für Fahrzeuge wird zunächst eine Platte aus geschäumtem Kunststoff mit beidseitig angeordneten Deckschichten hergestellt und diese anschliessend durch mittiges Spalten in zwei einseitig mit einer Deckschicht versehene Schaumplatten geschnitten. Die endgültige Formgebung der Platte zur Dachversteifung erfolgt hier durch direktes Verkleben der unbeschichteten Seite der Platte mit der Dachhaut. Bei diesem Fertigungsverfahren entfallen die teuren Formwerkzeuge. Die nur einseitige Belegung der Schaumplatte mit einer Deckschicht aus einem Kraftliner oder einem Vlies hat jedoch eine Verminderung der Steifigkeit zur Folge.

Der Erfindung liegt die Aufgabe zugrunde, einen Versteifungskörper der eingangs genannten Art zu schaffen, der bei gleicher Dimensionierung eine gegenüber herkömmlichen Versteifungskörpern erhöhte Biegefestigkeit aufweist.

Zur erfindungsgemässen Lösung der Aufgabe führt, dass die Deckschicht/en wenigstens eine Materialschicht mit einer Vielzahl von durch die Materialschicht gebildeten und von der Plattenoberfläche aufragenden Versteifungselementen umfasst/umfassen.

Die Deckschichten können aus den für Anwendung dieser Art bekannten Materialien bestehen.

Die Versteifungselemente sind bevorzugt durch Prägen, Drücken, Tiefen und dergleichen Verformungsschritte aus der Materialschicht herausgeformt.

Die Erfindung macht sich die Tatsache zunutze, dass die Versteifungselemente infolge der rechtwinklig zur unverformten Materialschichtebene auftretenden Zunahme der Dicke des verformten Werkstoffes die Quersteifigkeit des Grundmaterials erhöhen und damit zu einer besseren Biegefestigkeit des Versteifungskörpers führen.

Bei einer ersten zweckmässigen Ausführungsform eines Versteifungskörpers ist eine Vielzahl in Abstand zueinander angeordneter punktförmiger Versteifungselemente aus der Materialschicht herausgeformt.

Bei einer zweiten zweckmässigen Ausführungsform eines Versteifungskörpers ist eine Vielzahl parallel zueinander angeordneter linienförmiger Versteifungselemente aus der Materialschicht herausgeformt.

Die Materialschicht mit den Versteifungselementen ist bevorzugt eine Papierschicht, eine Kunststoff- oder Metallfolie oder eine mehrschichtige Folie mit einzelnen Schichten aus einer oder mehreren Papierschichten, Kunststofffolien und/oder Metallfolien. Als Metallfolie eignet sich insbesondere eine Aluminiumfolie.

Eine bevorzugte Materialschicht besteht aus einer Papierschicht, die unbeschichtet oder auch ein- oder beidseitig mit einem Kunststofffilm aus beispielsweise Polyethylen, Polypropylen oder Polyethylenterephthalat als Wasserdampfsperre beschichtet sein kann. Anstelle einer Beschichtung mit einem Kunststofffilm kann die Papierschicht auch mit wasserabweisenden, flammhemmenden und/oder Schimmel und Fäulnis verhindernden Stoffen imprägniert sein.

Bei einer weiter bevorzugten Materialschicht besteht die Kunststofffolie oder der Kunststofffilm aus einer Folie oder einem Film aus Polyamid, Polyvinylchlorid, Polyethylen, Polypropylen, Polyethylenterephthalat und die Metallfolie aus einer Aluminiumfolie.

Aus Deckschichten mit den vorstehend genannten Papierschichten, Kunststoff- und/oder Metallfolien können die Versteifungselemente mit an sich bekannten Umformverfahren wie z.B. Prägen mittels Prägewalzen oder Tiefen mittels Stempel und Matrize aus der Materialschicht herausgeformt werden.

Sind auf beiden Seiten der Leichtstoffplatte Deckschichten vorhanden, müssen nicht notwendigerweise beide Deckschichten eine mit Versteifungselementen versehene Materialschicht umfassen, sondern es kann eine Deckschicht Versteifungselemente aufweisen und die andere Deckschicht kann in glatter oder planer Konfiguration vorliegen.

Die biegsame Leichtstoffplatte besteht bevorzugt aus geschäumtem Kunststoff, insbesondere aus einem Polyurethanschaum, vorzugsweise aus einem geschlossenzelligen Polyurethanschaum mit einem Raumgewicht von etwa 30 bis 55 g/m³.

Die erfindungsgemässen Versteifungskörper können mit Vorteil überall dort eingesetzt werden, wo die Aussenhaut eines Bauteils vor Einbeulungen, die durch äussere Krafteinwirkungen auftreten, geschützt werden soll. Ein bevorzugter Einsatzbereich sind Dachversteifungen für Fahrzeuge, wobei
auch Dachhimmel (Headliner), gegebenenfalls mit der Dachhautverstärkung kombiniert, mit den Verstärkungskörpern ausgestattet werden können. Weitere Anwendungen des erfindungsgemässen Versteifungskörpers sind die Aussteifung flächiger Beplankungen und Formkörper aus Blech oder Kunststoff aller Art, wie z.B. Motorhauben, Kühlschranktüren und weiterer gegen Eindrücken zu verstärkender Bauteile.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- - Fig. 1: einen Querschnitt durch eine erste Ausführungsform einer Dachversteifung;
- - Fig. 2: einen Querschnitt durch die mit einer Dachhaut eines Fahrzeuges verklebten Dachversteifung von Fig. 1;
- - Fig. 3: einen Querschnitt durch eine zweite Ausführungsform einer Dachversteifung;
- - Fig. 4: einen Querschnitt durch einen Teil einer Dachversteifung mit einer Deckschicht mit Versteifungselementen.

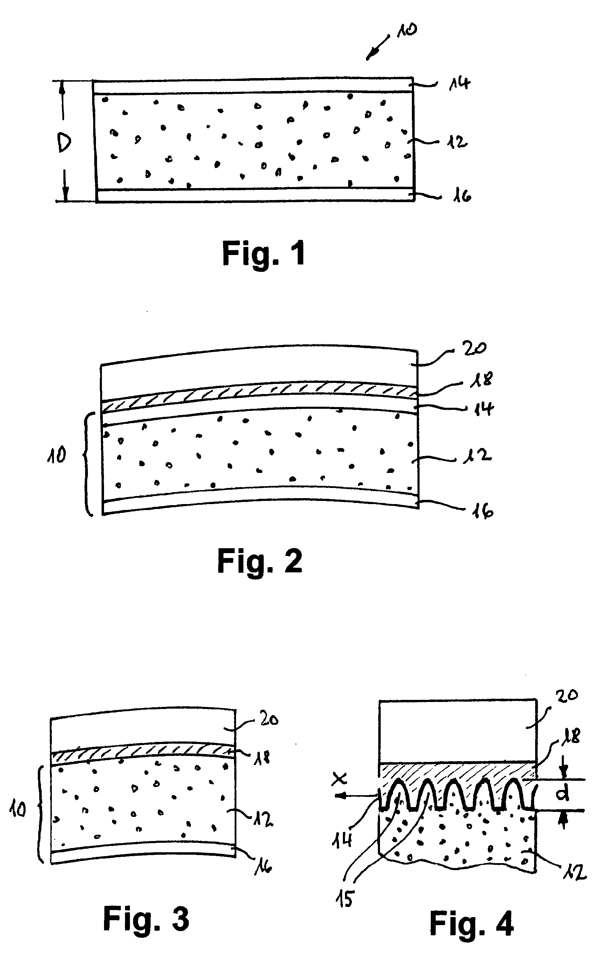

Eine Dachversteifung 10 besteht gemäss Fig. 1 aus einer Platte 12 aus geschäumtem Kunststoff, z.B. Polyurethanschaum, mit beidseitig angeordneten Deckschichten 14, 16 aus einer geprägten Materialschicht, z.B. einer geprägten Aluminiumfolie. Die Gesamtdicke D der Dachversteifung 10 beträgt beispielsweise etwa 5 bis 10 mm.

Die Herstellung dieses Sandwichmaterials erfolgt üblicherweise in der Form von Bandmaterial in einer Doppelbandpresse, in der gleichzeitig mit dem Aufschäumen des Kunststoffes zum geschäumten Bandmaterial eine feste Verbindung mit den in Bandform zugeführten Deckschichten erzeugt wird. Die einzelnen Dachversteifungen werden vom Bandmaterial abgelängt und zu einem an die Dachhaut angepassten Formteil gestanzt.

Wie in Fig. 2 gezeigt, wird die Dachversteifung 10 mittels eines in Raupenform oder vollflächig aufgetragenen Klebstoffs 18 mit einer Dachhaut 20 eines in der Zeichnung nicht wiedergegebenen Fahrzeugs verklebt.

Die in Fig. 3 gezeigte Variante einer Dachversteifung 10 besteht aus einer nur einseitig mit einer Deckschicht 16 verbundenen Schaumplatte 12, die mit ihrer unbeschichteten Seite über eine Klebstoffschicht 18 mit der Dachhaut verklebt ist. Die Herstellung dieser Variante erfolgt auf die oben beschriebene Weise in einer Doppelbandpresse, wobei das beidseitig mit Deckschichten 14, 16 versehene geschäumte Bandmaterial anschliessen mittig in zwei einseitig mit einer Deckschicht versehene Teile gespalten wird.

Aus der in Fig. 4 dargestellte Dachversteifung mit einer Deckschicht 14 aus beispielsweise einer Aluminiumfolie mit einer Vielzahl von parallel zueinander angeordneten, von der Oberfläche der Schaumplatte 12 aufragenden linienförmigen Prägungen 15, ist die infolge der rechtwinklig zur unverformten Materialschichtebene auftretenden Zunahme der Dicke d des verformten Werkstoffes erhöhte Quersteifigkeit des mit den linienförmigen Prägungen 15 versehenen Grundmaterials gegenüber einer nicht verformten Materialschicht ohne weiteres verständlich. Die in Längsrichtung x etwas verminderte Längssteifigkeit bei quer zur Längsrichtung verlaufenden, parallel zueinander angeordneten linienförmigen Prägungen führt zu einer leichteren Verformbarkeit in dieser Richtung, wodurch die Dachversteifung problemlos ohne vorgängige Umformung in einem Formwerkzeug direkt mit der Dachhaut verklebt werden kann.

Während des Stanzvorgangs eingebrachte Rillen oder Nuten können zusätzlich in der Querrichtung versteifend wirksam werden und eine auch längs wirkende Verformungssteife bewirken.

## Patentansprüche

1. Versteifungskörper mit einer biegsamen Leichtstoffplatte (12) mit wenigstens einer mit einer Oberfläche der Platte (12) verbundenen Deckschicht (14, 16),
**dadurch gekennzeichnet, dass**
die Deckschicht/en (14, 16) wenigstens eine Materialschicht mit einer Vielzahl von durch die Materialschicht gebildeten und von der Plattenoberfläche aufragenden Versteifungselementen (15) umfasst/umfassen.

2. Versteifungskörper nach Anspruch 1, **dadurch gekennzeichnet, dass** die Versteifungselemente (15) aus der Materialschicht herausgeformt sind.

3. Versteifungskörper nach Anspruch 2, **dadurch gekennzeichnet, dass** die Versteifungselemente (15) durch Prägen, Drücken, Tiefen und dergleichen Verformungsschritte aus der Materialschicht herausgeformt sind.

4. Versteifungskörper nach Anspruch 2 oder 3, **dadurch gekennzeichnet, dass** eine Vielzahl in Abstand zueinander angeordneter punktförmiger Versteifungselemente (15) aus der Materialschicht herausgeformt sind.

5. Versteifungskörper nach Anspruch 2 oder 3, **dadurch gekennzeichnet, dass** eine Vielzahl parallel zueinander angeordneter linienförmiger Versteifungselemente (15) aus der Materialschicht herausgeformt sind.

6. Versteifungskörper nach einem der Ansprüche 1 bis 5, **dadurch gekennzeichnet, dass** die Materialschicht eine Papierschicht, eine Kunststoff- oder Metallfolie oder eine mehrschichtige Folie mit einer oder mehreren Papierschichten, einer oder mehreren Kunststofffolien oder -filmen und/oder einer oder mehreren Metallfolien ist.

7. Versteifungskörper nach Anspruch 6, **dadurch gekennzeichnet, dass** die Papierschicht eine mit wasserabweisenden, flammhemmenden und/oder Schimmel und Fäulnis verhindernden Stoffen imprägnierte Papierschicht ist

8. Versteifungskörper nach Anspruch 6, **dadurch gekennzeichnet, dass** die Kunststofffolie oder der Kunststofffilm eine Folie oder ein Film aus Polyamid, Polyvinylchlorid, Polyethylen, Polypropylen, Polyethylenterephthalat und die Metallfolie eine Aluminiumfolie ist.

9. Versteifungskörper nach einem der Ansprüche 1 bis 8, **dadurch gekennzeichnet, dass** die biegsame Leichtstoffplatte (12) aus einem geschäumten Kunststoff besteht.

10. Versteifungskörper nach Anspruch 9, **dadurch gekennzeichnet, dass** der geschäumte Kunststoff ein Polyurethanschaum, vorzugsweise ein geschlossenzelligen Polyurethanschaum mit einem Raumgewicht von 30 bis 55 g/m³ ist.

11. Verwendung eines Versteifungskörpers nach einem der vorangehenden Ansprüche zur Versteifung von flächigen Beplankungen, Formkörpern und Bauteilen mit einer gegen Eindrücken zu verstärkenden Haut aus Blech oder Kunststoff.
